# EUROPÄISCHE PATENTANMELDUNG

(11) **EP 3 696 125 A1**
(43) Veröffentlichungstag der Anmeldung: **19.08.2020**
(21) Anmeldenummer: 20153187.8
(22) Anmeldetag: 22.01.2020
(51) Int. Cl.: B65H 27/00, D21G 1/02, F16C 13/00

(54) **VERFAHREN ZUM HERSTELLEN EINES WALZENKÖRPERS FÜR EINE WALZE ZUM TRANSPORTIEREN UND / ODER ZUM FÜHREN EINES BAHNFÖRMIGEN MATERIALS SOWIE WALZENKÖRPER UND WALZE**

(30) Priorität: 23.01.2019 DE 102019101594
(71) Anmelder: Inometa GmbH, 32052 Herford (DE)
(72) Erfinder: STEFFENS, Christian, 32052 Herford (DE)
(74) Vertreter: Bittner, Thomas L.

(57) **Zusammenfassung**

Die Erfindung betrifft ein Verfahren zum Herstellen eines Walzenkörpers für eine Walze zum Führen und / oder zum Transportieren eines bahnförmigen Materials wie Papier, Folie, Textil oder dergleichen mit folgenden Schritten: Bereitstellen eines Rohlings für einen Walzenkörper mit einem Grundkörper, welcher eine äußere Verschleißschutzschicht aufweist; Strukturieren einer äußeren Oberfläche der Verschleißschutzschicht, derart, dass im Bereich der äußeren Oberfläche Ausnehmungen und hierzwischen angeordnete Stege hergestellt werden; Auftragen eines Antihaftmaterials auf die strukturierte äußere Oberfläche der Verschleißschutzschicht, derart, dass sich das Antihaftmaterial zumindest in den Ausnehmungen ablagert; und Bearbeiten der äußeren Oberfläche der Verschleißschutzschicht, derart, dass eine planare äußere Oberfläche hergestellt wird. Weiterhin sind ein Walzenkörper für eine Walze zum Führen und / oder zum Transportieren eines bahnförmigen Materials sowie eine Walze vorgesehen.

## Beschreibung

Die Erfindung betrifft ein Verfahren zum Herstellen eines Walzenkörpers für eine Walze zum Transportieren und / oder zum Führen eines bahnförmigen Materials wie Papier, Folie, Textil oder dergleichen sowie einen Walzenkörper und eine Walze.

### Hintergrund

Derartige Walzen werden in verschiedenen Anwendungen genutzt, um ein bahnförmiges Material wie Papier, Folie, Textil oder dergleichen zu führen und / oder zu transportieren. Beispielhafte Anwendungen betreffen die Verwendung in Druckmaschinen oder Verpackungseinrichtungen.

Beim Transport bahnförmiger Medien kann es je nach Temperatur und Art des Mediums prozessbedingt zu Anhaftung des geförderten Materials an der Walzenoberfläche kommen. Dies führt zu höheren Ablösekräften der Warenbahn bis hin zur vollständigen Anhaftung und Umschlingung. Daher ist bekannt, die Walzenoberfläche mit einer Antihaftbeschichtung zu versehen. Bekannte Antihaftbeschichtungen wie zum Beispiel Fluorpolymersbeschichtungen schaffen zwar kurzfristige Abhilfe, sind wegen geringer mechanischer Festigkeit des Werkstoffs und des auftretenden Verschleißes durch das Medium nicht nachhaltig. Andere Alternativen wie zum Beispiel in Mikrorisse von Chromschichten eingelagerte Fluorpolymere sind zwar verschleißfester, weisen jedoch einen deutlich schlechteren Antihafteffekt auf, insbesondere wenn der zunächst vorhandene geschlossene Polymerfilm verschlissen ist und lediglich das in den Rissen eingelagerte Polymer vorliegt. Gleiches gilt für infiltrierte Keramikschichten.

### Zusammenfassung

Aufgabe der Erfindung ist es, ein Verfahren zum Herstellen eines Walzenkörpers für eine Walze zum Führen und / oder zum Transportieren eines bahnförmigen Materials wie Papier, Folie, Textil oder dergleichen sowie einen Walzenkörper und eine Walze anzugeben, mit denen die Haftung des bahnförmigen Materials am Walzenkörper gemindert werden kann.

Zur Lösung ist ein Verfahren zum Herstellen eines Walzenkörpers für eine Walze zum Führen und / oder zum Transportieren eines bahnförmigen Materials wie Papier, Folie, Textil oder dergleichen nach dem unabhängigen Anspruch 1 geschaffen. Weiterhin sind ein Walzenkörper sowie eine Walze nach den nebengeordneten Ansprüchen 11 und 12 geschaffen. Ausgestaltungen sind Gegenstand von abhängigen Unteransprüchen.

Nach einem Aspekt ist ein Verfahren zum Herstellen eines Walzenkörpers für eine Walze zum Führen und / oder zum Transportieren eines bahnförmigen Materials wie Papier, Folie, Textil oder dergleichen mit den folgenden Schritten geschaffen: Bereitstellen eines Rohlings für einen Walzenkörper mit einem Grundkörper, welcher eine äußere Verschleißschutzschicht aufweist; Strukturieren einer äußeren Oberfläche der Verschleißschutzschicht, derart, dass im Bereich der äußeren Oberfläche Ausnehmungen und hierzwischen angeordnete Stege hergestellt werden; Auftragen eines Antihaftmaterials auf die strukturierte äußere Oberfläche der Verschleißschutzschicht, derart, dass sich das Antihaftmaterial zumindest in den Ausnehmungen ablagert; und Bearbeiten der äußeren Oberfläche der Verschleißschutzschicht mit dem hierauf abgelagerten Antihaftmaterial, derart, dass eine planare äußere Oberfläche hergestellt wird.

Nach einem weiteren Aspekt ist ein Walzenkörper für eine Walze zum Führen und / oder zum Transportieren eines bahnförmigen Materials wie Papier, Folie, Textil oder dergleichen geschaffen, wobei der Walzenkörper Folgendes aufweist: einem Grundkörper; einer äußeren Verschleißschutzschicht, die auf dem Grundkörper angeordnet ist; und einer Strukturierung im Bereich einer äußeren Oberfläche der Verschleißschicht, die Ausnehmungen und hierzwischen angeordnete Stege aufweist. Zumindest im Bereich der Ausnehmungen ist ein Antihaftmaterial auf die strukturierte äußere Oberfläche der Verschleißschutzschicht aufgetragen, und die äußere Oberfläche der Verschleißschutzschicht ist planar.

Weiterhin ist eine Walze zum Führen und / oder zum Transportieren eines bahnförmigen Materials wie Papier, Folie, Textil oder dergleichen mit einem solchen Walzenkörper geschaffen, wobei die Walze als eine Transportwalze, eine Umlenkwalze, eine Führungswalze und / oder eine Reckwalze ausgeführt ist.

Es ist vorgesehen, dass das Antihaftmaterial im Bereich der äußeren Oberfläche der Verschleißschutzschicht zumindest in den Ausnehmungen abgelagert ist, wodurch bei dem Walzenkörper eine äußere Oberfläche, die im Betrieb mit dem zu führenden und / oder zu transportierenden bahnförmigen Material in Kontakt kommt, mit verbesserter Antihafteigenschaft bereitgestellt ist. Im Betrieb kommt das bahnförmige Material hierbei mit der planaren Oberfläche in Kontakt.

Das Strukturieren der äußeren Oberfläche der Verschleißschutzschicht kann beispielsweise mittels Lasern ausgeführt werden. Auch andere Verfahren zum Mikrostrukturieren der Verschleißschutzschicht können zum Einsatz kommen, zum Beispiel chemisches Ätzen, wahlweise in Kombination mit folgendem elektrochemischem Ätzen (Diamant-Schneiden).

Die Strukturierung der äußeren Oberfläche der Verschleißschutzschicht kann als eine regelmäßige Strukturierung mit im Wesentlichen gleichförmigen und / oder gleichgroßen Ausnehmungen ausgebildet sein. Alternativ können Ausnehmungen mit unterschiedlicher Form und / oder unterschiedlicher Größe im Bereich der äußeren Oberfläche der Verschleißschutzschicht beim Strukturieren hergestellt werden. Vergleichbar können die Stege, insbesondere hinsichtlich ihrer Stegbreite, im Bereich der äußeren Oberfläche im Wesentlichen gleich sein. Alternativ können unterschiedliche Stegtypen vorgesehen sein, zum Beispiel Stege mit unterschiedlicher Stegbreite. Es kann vorgesehen sein, dass im Bereich der Stege beim Strukturieren kein Materialabtrag stattfindet, so dass eine Deckfläche der Stege im Bereich der äußeren Oberfläche der Verschleißschutzschicht liegt, wohingegen die Ausnehmungen demgegenüber vertieft sind.

Für die äußere Oberfläche der Verschleißschutzschicht kann beim Bearbeiten eine Rauheit von Rz < 20 hergestellt werden. Die Rauigkeit oder Rauheit der Oberfläche kann als Mittelwert aus gemessenen Rautiefen (Rz) in Mikrometern angegeben werden. Es kann vorgesehen sein, dass die äußere Oberfläche der Verschleißschutzschicht beim Bearbeiten mit einer Rauheit von Rz < 6 hergestellt wird. Das Ausbilden der Rauheit kann während und / oder nach dem Planieren der äußeren Oberfläche hergestellt werden. Beim Bearbeiten der äußeren Oberfläche der Verschleißschutzschicht, auf die zuvor das Antihaftmaterial aufgetragen wurde, erfolgt ein wenigstens teilweiser Materialabtrag, insbesondere betreffend das Antihaftmaterial.

Es kann ein Rohling bereitgestellt werden, bei dem die Verschleißschutzschicht aus einem der folgenden Werkstoffe ist: Keramik, Hartmetall und Hartstofflegierung. Zum Beispiel kann die Verschleißschutzschicht aus Chromoxid bestehen.

Die Verschleißschutzschicht kann mittels thermischen Spritzen aufgetragen werden. Auch andere Verfahren zum Mikrostrukturieren der Verschleißschutzschicht können zum Einsatz kommen, zum Beispiel galvanisches oder chemisches Auftrage Laserauftrags-Schweißen.

Das Antihaftmaterial kann beim Auftragen als eine durchgehende oder nur Oberflächenteilbereiche bedeckende Beschichtung aufgebracht werden, welche auch die Stege erfasst. Im Unterschied zu einem lokal begrenzten Auftragen des Antihaftmaterials, zum Beispiel im Wesentlichen nur in den Ausnehmungen, wird hierbei eine Schicht aus dem Antihaftmaterial auf der äußeren Oberfläche der Verschleißschutzschicht hergestellt. Diese Beschichtung erfasst dann auch die Stege zwischen den Ausnehmungen.

Beim Bearbeiten der äußeren Oberfläche der Verschleißschutzschicht kann das Antihaftmaterial auf den Stegen zumindest teilweise wieder abgetragen werden. Das Abtragen des Antihaftmaterials kann bis hin zum wenigstens teilweisen Freilegen der Stege erfolgen. Diese werden dann im Bereich der äußeren Oberfläche wieder sichtbar, nachdem sie zuvor mit der Schicht des Antihaftmaterials bedeckt waren.

Die Ausnehmungen können im Bereich der äußeren Oberfläche der Verschleißschutzschicht mit wenigstens einem der folgenden Strukturelementen hergestellt werden: Napf, Tasche und Kanal. Die Ausnehmungen im Bereich der Oberfläche der Verschleißschutzschicht können alle gemäß genau einer Art der Strukturelemente ausgebildet sein. Alternativ sind im Bereich der äußeren Oberfläche der Verschleißschutzschicht mittels des Strukturierens verschiedene Strukturelemente hergestellt.

Beim Strukturieren der äußeren Oberfläche der Verschleißschutzschicht kann für eine Breite der Ausnehmungen und eine Stegbreite der Stege ein Verhältnis von wenigstens etwa 2:1 ausgebildet werden. Bei einem anderen Beispiel kann das Verhältnis zwischen der Breite der Ausnehmungen und der Stegbreite wenigstens etwa 5:1 betragen. Weiterhin kann in einem Beispiel vorgesehen sein, ein Verhältnis von wenigstens 10:1 herzustellen.

Als Antihaftmaterial kann ein Material aus der folgenden Gruppe aufgetragen werden: Silikon, Silan, Siloxangruppen und Fluorpolymer wie Polytetrafluorethen (PTFE), Perfluoralkoxy Alkan (PFA) oder Tetrafluorethylen-Hexafluorpropylen-Copolymer (FEP).

Die Ausnehmungen können mit einer Tiefe zwischen etwa 20µm und etwa 150µm hergestellt werden. In einem anderen Beispiel weisen die Ausnehmungen eine Tiefe von etwa 50µm bis etwa 150µm auf. In einer weiteren Ausgestaltung können die Ausnehmungen mit einer Tiefe zwischen etwa 50µm und etwa 120µm hergestellt sein. Die Tiefe der Ausnehmungen kann über die gesamte äußere Oberfläche der Verschleißschutzschicht im Wesentlichen gleich sein. Alternativ kann vorgesehen sein, Ausnehmungen mit unterschiedlichen Tiefen herzustellen.

Die vorangehend in Verbindung mit dem Verfahren zum Herstellen des Walzenkörpers erläuterten Ausgestaltungen können in Verbindung mit dem Walzenkörper und der Walze entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
Fig. 1 eine schematische Darstellung für ein Verfahren zum Herstellen eines Walzenkörpers für eine Walze zum Führen und / oder zum Transportieren eines bahnförmigen Materials wie Papier, Folie, Textil oder dergleichen;
Fig. 2 eine schematische Darstellung einer Walze mit einem Walzenkörper und
Fig. 3 eine schematische Darstellung eines Oberflächenabschnitts des Walzenkörpers nach dem Auftragen des Antihaftmaterials und nach dem Planieren im Querschnitt.

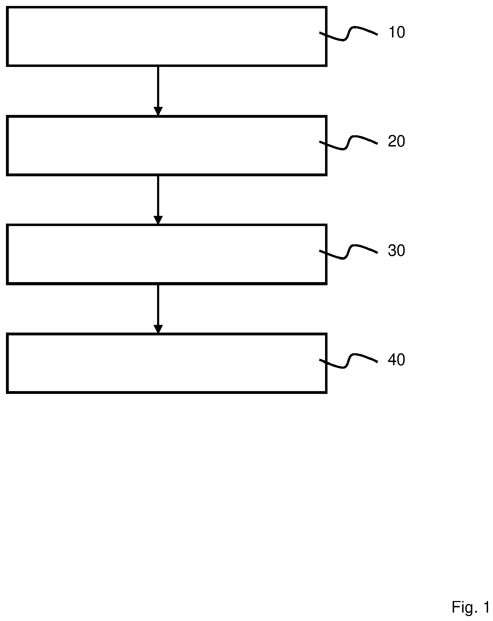

Fig. 1 zeigt schematisch ein Ablaufdiagramm für ein Verfahren zum Herstellen eines Walzenkörpers für eine Walze zum Führen und / oder zum Transportieren eines bahnförmigen Materials wie Papier, Folie, Textil oder dergleichen. In einem Schritt 10 wird ein Rohling für einen Walzenkörper mit einem Grundkörper bereitgestellt, welcher eine äußere Verschleißschutzbeschichtung aufweist. Der Grundkörper kann beispielsweise aus einem faserverstärkten Material hergestellt sein. Die Verschleißschutzbeschichtung ist außenseitig auf den Grundkörper aufgebracht und besteht beispielsweise aus einem der folgenden Werkstoffe: Keramik, Hartmetall und Hartstofflegierung. Zum Beispiel kann es sich um Chromoxid handeln. Das Auftragen der Verschleißschutzbeschichtung kann zuvor beispielsweise mittels thermischen Spritzen erfolgt sein.

Im Schritt 20 wird die äußere Oberfläche der Verschleißschutzschicht strukturiert, derart, dass im Bereich der äußeren Oberfläche Ausnehmungen und hierzwischen angeordnete Stege hergestellt werden. Das Strukturieren kann beispielsweise mittels Lasern ausgeführt werden. Die Ausnehmungen im Bereich der äußeren Oberfläche der Verschleißschutzbeschichtung können als regelmäßige oder unregelmäßige Strukturierung hergestellt werden. Die zwischen den Ausnehmungen angeordneten Stege können beim Strukturieren der äußeren Oberfläche von einem Materialabtrag vollkommen ausgenommen sein. Die Ausnehmungen können zum Beispiel als Napf, Tasche oder Kanal hergestellt werden. Letzteres ist zum Beispiel dadurch ausführbar, dass mehrere Näpfe oder Taschen mittels Durchbruch im Bereich eines hierzwischen angeordneten Stegs ausgebildet werden.

Im Schritt 30 wird im Bereich der strukturierten äußeren Oberfläche der Verschleißschutzschicht ein Antihaftmaterial aufgetragen, derart, dass sich das Antihaftmaterial zumindest in den Ausnehmungen ablagert. Es kann vorgesehen sein, das Antihaftmaterial als Schicht aufzutragen, so dass auch die Stege hiervon erfasst werden.

Im Schritt 40 wird die so hergestellte äußere Oberfläche der Verschleißschutzschicht weiter bearbeitet, insbesondere planiert. Hierdurch wird eine planare äußere Oberfläche hergestellt. Das Bearbeiten umfasst einen Materialabtrag, insbesondere betreffend das Antihaftmaterial. Hierbei kann vorgesehen sein, dass das Antihaftmaterial auf den Stegen zumindest teilweise wieder entfernt wird, so dass außenseitige Deckflächen der Stege (wieder) sichtbar werden, nachdem diese zuvor von dem aufgebrachten Antihaftmaterial bedeckt waren. Die äußere Oberfläche der Verschleißschutzschicht kann mit einer Rauheit von Rz < 20 hergestellt werden.

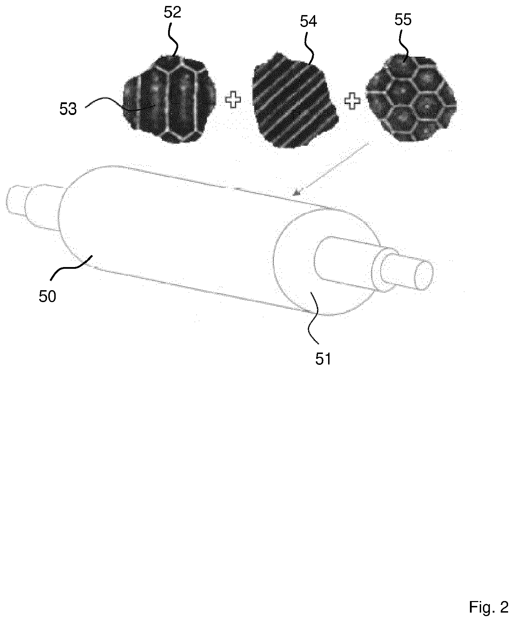

Fig. 2 zeigt eine schematische Darstellung einer Walze 50 mit einem Walzenkörper 51 sowie einen Oberflächenabschnitt 52 des Walzenkörpers 51, der nach dem voran beschriebenen Verfahren hergestellt wurde. Im Bereich des Oberflächenabschnitts 52 sind Ausnehmungen 53 angeordnet, die ganz oder teilweise von Stegen 54 umgeben sind. Zumindest in den Ausnehmungen 53 ist ein Antihaftmaterial 55 abgelagert. Die Stege 54 sind ganz oder teilweise frei von dem Antihaftmaterial 55. Bei der gezeigten Ausführungsform weisen die Ausnehmungen 53 eine eckige Querschnittsform auf.

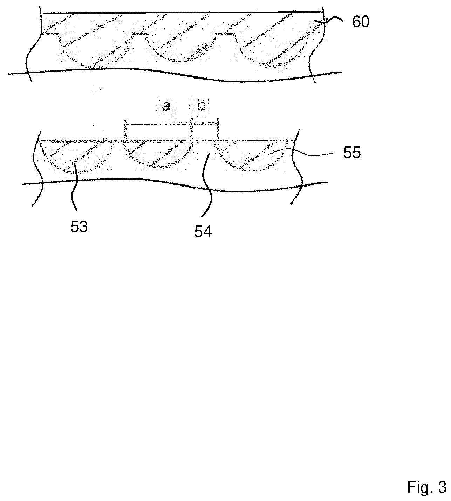

Fig. 3 zeigt eine schematische Darstellung eines Oberflächenabschnitts 60 des Walzenkörpers 51 nach dem Auftragen des Antihaftmaterials und nach dem Planieren im Querschnitt. Bei dem gezeigten Beispiel ist für eine Breite a der Ausnehmungen 53 und eine Stegbreite b der Stege 54 ein Verhältnis a:b von größer 2:1 ausgebildet.

Die in der vorstehenden Beschreibung, den Ansprüchen sowie der Figuren offenbarten Merkmale können sowohl einzeln als auch in beliebiger Kombination für die Verwirklichung der verschiedenen Ausführungen von Bedeutung sein.

## Patentansprüche

1. Verfahren zum Herstellen eines Walzenkörpers für eine Walze zum Führen und / oder zum Transportieren eines bahnförmigen Materials wie Papier, Folie, Textil oder dergleichen, mit:
- Bereitstellen eines Rohlings für einen Walzenkörper mit einem Grundkörper, welcher eine äußere Verschleißschutzschicht aufweist;
- Strukturieren einer äußeren Oberfläche der Verschleißschutzschicht, derart, dass im Bereich der äußeren Oberfläche Ausnehmungen und hierzwischen angeordnete Stege hergestellt werden;
- Auftragen eines Antihaftmaterials auf die strukturierte äußere Oberfläche der Verschleißschutzschicht, derart, dass sich das Antihaftmaterial zumindest in den Ausnehmungen ablagert; und
- Bearbeiten der äußeren Oberfläche der Verschleißschutzschicht, derart, dass eine planare äußere Oberfläche hergestellt wird.

2. Verfahren nach Anspruch 1, **dadurch gekennzeichnet, dass** die äußere Oberfläche der Verschleißschutzschicht beim Bearbeiten mit einer Rauheit von Rz < 20 hergestellt wird.

3. Verfahren nach Anspruch 1 oder 2, **dadurch gekennzeichnet, dass** ein Rohling bereitgestellt wird, bei dem die Verschleißschutzschicht aus einem der folgenden Werkstoffe ist: Keramik, Hartmetall und Hartstofflegierung.

4. Verfahren nach mindestens einem der vorangehenden Ansprüche, **dadurch gekennzeichnet, dass** die Verschleißschutzschicht mittels thermischen Spritzen aufgetragen wird.

5. Verfahren nach mindestens einem der vorangehenden Ansprüche, **dadurch gekennzeichnet, dass** das Antihaftmaterial beim Auftragen als eine Beschichtung aufgebracht wird, welche auch die Stege erfasst.

6. Verfahren nach Anspruch 5, **dadurch gekennzeichnet, dass** beim Bearbeiten der äußeren Oberfläche der Verschleißschutzschicht das Antihaftmaterial auf den Stegen zumindest teilweise wieder abgetragen wird.

7. Verfahren nach mindestens einem der vorangehenden Ansprüche, **dadurch gekennzeichnet, dass** die Ausnehmungen im Bereich der äußeren Oberfläche der Verschließschicht mit wenigstens einem der folgenden Strukturelementen hergestellt werden: Napf, Tasche und Kanal.

8. Verfahren nach mindestens einem der vorangehenden Ansprüche, **dadurch gekennzeichnet, dass** beim Strukturieren der äußeren Oberfläche der Verschleißschutzschicht für eine Breite der Ausnehmungen und eine Stegbreite der Stege ein Verhältnis von wenigstens etwa 2:1 ausgebildet wird.

9. Verfahren nach mindestens einem der vorangehenden Ansprüche, **dadurch gekennzeichnet, dass** als Antihaftmaterial ein Material aus der folgenden Gruppe aufgetragen wird: Silikon, Silan, Siloxangruppen und Fluorpolymer wie Polytetrafluorethen (PTFE), Perfluoralkoxy Alkan (PFA) oder Tetrafluorethylen-Hexafluorpropylen-Copolymer (FEP).

10. Verfahren nach mindestens einem der vorangehenden Ansprüche, **dadurch gekennzeichnet, dass** die Ausnehmungen mit einer Tiefe zwischen etwa 20µm und etwa 150µm hergestellt werden.

11. Walzenkörper für eine Walze zum Führen und / oder zum Transportieren eines bahnförmigen Materials wie Papier, Folie, Textil oder dergleichen, mit:
- einem Grundkörper;
- einer äußeren Verschleißschutzschicht, die auf dem Grundkörper angeordnet ist; und
- einer Strukturierung im Bereich einer äußeren Oberfläche der Verschleißschicht, die Ausnehmungen und hierzwischen angeordnete Stege aufweist;
wobei zumindest im Bereich der Ausnehmungen ein Antihaftmaterial auf die strukturierte äußere Oberfläche der Verschleißschutzschicht aufgetragen ist und die äußere Oberfläche der Verschleißschutzschicht planar ist.

12. Walze zum Führen und / oder zum Transportieren eines bahnförmigen Materials wie Papier, Folie, Textil oder dergleichen mit einem Walzenkörper nach Anspruch 11, ausgeführt als mindestens einer der folgenden Watzentypen: Transportwalze, Umlenkwalze, Führungswalze und Reckwalze.
